# FASCICULE DE BREVET EUROPEEN

(11) **EP 3 556 057 B1**
(45) Date de publication et mention de la délivrance du brevet: **04.11.2020**
(21) Numéro de dépôt: 17811966.5
(22) Date de dépôt: 14.12.2017
(51) Int. Cl.: H04L 12/28

(54) **PROCEDE ET DISPOSITIF DE SELECTION D'UN MODE DE FONCTIONNEMENT D'UN MODEM CABLE**
VERFAHREN UND VORRICHTUNG ZUR AUSWAHL EINES BETRIEBSMODUS EINES KABELMODEMS
METHOD AND DEVICE FOR SELECTING A MODE OF OPERATION OF A CABLE MODEM

(30) Priorité: 16.12.2016 FR 1662635
(43) Date de publication de la demande: 23.10.2019
(73) Titulaire: Sagemcom Broadband SAS, 92500 Rueil-Malmaison (FR)
(72) Inventeur: DIONISI, Florent, 92500 Rueil-Malmaison (FR)
(74) Mandataire: Cabinet Le Guen Maillet
(86) Numéro de dépôt international: PCT/EP2017/082919
(87) Numéro de publication internationale: WO 2018/109121

(56) Documents cités:
- EP-A2- 2 991 248
- US-A1- 2015 365 732
- Rohde & Schwarz: "DOCSIS 3.1 Application Note", , 26 février 2015 (2015-02-26), XP055375720, Extrait de l'Internet: URL:https://cdn.rohde-schwarz.com/pws/dl_d ownloads/dl_application/application_notes/ 7mh89/7MH89_0E.pdf [extrait le 2017-05-24]

## Description

La présente invention concerne un procédé et un dispositif de sélection du mode de fonctionnement d'un modem câble entre un premier mode conforme à un premier standard et un second mode de fonctionnement conforme à un second standard.

« Data Over Cable Service Interface Spécification » (DOCSIS) est un ensemble de normes qui définit les règles et les protocoles d'interfaces, de communication et de configuration pour les systèmes de transport de données et d'accès à Internet utilisant les anciens réseaux de télévision par câble coaxial. Il permet l'ajout du transfert de données, à vitesse élevée, aux systèmes existants de télévision par câble.

DOCSIS est utilisé par les opérateurs de télévision par câble pour fournir l'accès à Internet sur leur infrastructure hybride existante HFC (hybride fibre et coaxial) qui sert ou servait à la télévision par câble.

Un modem câble est un type de modem qui permet de se connecter à Internet en étant relié à un réseau de télévision par câble. Le modem-câble est bidirectionnel, il n'utilise qu'un seul câble coaxial pour les deux directions, aval pour les données du réseau vers l'utilisateur et amont pour les données de l'utilisateur vers le réseau. Le réseau peut être constitué uniquement de câbles coaxiaux ou être hybride fibre coaxial.

Le standard DOCSIS 3.0 utilise une porteuse numérique en modulation QAM (Quadrature Amplitude Modulation) de 64 ou 256 QAM en mesure d'offrir une vitesse de transmission de 30 Mbit/s à 800 Mbit/s vers l'utilisateur.

Deux largeurs de bande 6 MHz ou 8 MHz sont utilisées.

Avec la norme DOCSIS 3.1, on abandonne, pour le transfert des "données" l'ancienne découpe en canaux (de 6 ou 8 MHz) héritée de la télévision par câble, au profit d'une modulation OFDM/OFDMA pouvant utiliser une grande partie, ou même la totalité de la bande passante du câble coaxial.

Plus précisément, la partie basse de la bande de fréquences est utilisée pour le sens amont et la partie haute pour le sens aval.

Sur la voie descendante, plusieurs canaux (porteuses) peuvent, en DOCSIS 3.0, être agrégés (regroupés) vers un même abonné ; cela permet d'atteindre 200 Mbit/s dans le sens descendant en agrégeant 4 canaux et jusqu'à 1 200 Mbit/s en utilisant 24 canaux.

Aujourd'hui, la version DOCSIS 3.1 est en cours de déploiement. Cette évolution technique nécessite une migration architecturale et matérielle importante. Pendant la transition, le réseau devra être compatible avec le standard DOCSIS 3.0 et en parallèle du standard DOCSIS 3.1.

Le déploiement de la version DOCSIS 3.1 passe par un accroissement ou une réallocation du spectre en fréquence du réseau et nécessite une connaissance exacte de la nature des signaux déjà existants, tels que des signaux de télévision, de radio, sur le réseau de l'opérateur et de leur position dans le spectre en fréquence.

Les opérateurs désireux de basculer tout ou partie de leur réseau vers la version DOCSIS 3.1 qui s'appuie sur un plan fréquentiel différent de celui qu'ils ont déjà déployé sont ainsi confrontés à la problématique de cartographie des signaux hors bandes locaux.

La publication de brevet EP2991248 décrit un modem supportant le protocole DOCSIS 3.1 utilisant différents filtres de fréquence activés à l'aide d'un commutateur interne.

La présente invention a pour but de résoudre les inconvénients de l'art antérieur en proposant un procédé et un dispositif qui permettent une sélection d'un mode de fonctionnement d'un modem câble entre un premier mode de fonctionnement conforme à un premier standard et un second mode de fonctionnement conforme à un second standard qui soit adapté aux différents signaux présents sur un réseau de télévision par câble coaxial.

A cette fin, selon un premier aspect, l'invention propose un procédé de sélection d'un mode de fonctionnement d'un modem câble entre un premier et un second modes de fonctionnement, le premier mode de fonctionnement permettant la réception de données dans une liaison descendante occupant une première bande de fréquences et la transmission de données dans une liaison montante occupant une seconde bande de fréquences, les première et seconde bandes de fréquences étant séparées par une troisième bande de fréquences, le second mode de fonctionnement permettant la réception de données dans une liaison descendante occupant une quatrième bande de fréquences et la transmission de données dans une liaison montante occupant une cinquième bande de fréquences, les quatrième et cinquième bandes de fréquences étant séparées par une sixième bande de fréquences, la troisième bande de fréquences étant comprise dans la cinquième bande de fréquences et la sixième bande de fréquences étant comprise dans la première bande de fréquence, les données transmises et reçues étant conformes à un premier et/ou un second standard, caractérisé en ce que le procédé comporte les étapes, effectuées par le modem câble, de :
- mise du modem câble dans le second mode de fonctionnement,
- analyse des signaux compris dans au moins la partie de la cinquième bande de fréquences comprenant la troisième bande de fréquences,
- détermination si des signaux analysés ne sont pas des signaux conformes au premier ou au second standard,
- mise du modem câble dans un mode de transmission et réception de données selon le second standard si des signaux analysés ne sont pas des signaux conformes au premier et au second standards et ne sont pas compris dans la troisième bande de fréquences.

L'invention concerne aussi un dispositif de sélection d'un mode de fonctionnement d'un modem câble entre un premier et un second modes de fonctionnement, le premier mode de fonctionnement permettant la réception de données dans une liaison descendante occupant une première bande de fréquences et la transmission de données dans une liaison montante occupant une seconde bande de fréquences, les première et seconde bandes de fréquences étant séparées par une troisième bande de fréquences, le second mode de fonctionnement permettant la réception de données dans une liaison descendante occupant une quatrième bande de fréquences et la transmission de données dans une liaison montante occupant une cinquième bande de fréquences, les quatrième et cinquième bandes de fréquences étant séparées par une sixième bande de fréquences, la troisième bande de fréquences étant comprise dans la cinquième bande de fréquences et la sixième bande de fréquences étant comprise dans la première bande de fréquence, les données transmises et reçues étant conformes à un premier et/ou un second standard, caractérisé en ce que le procédé comporte les étapes, effectuées par le modem câble, de :
- mise du modem câble dans le second mode de fonctionnement,
- analyse des signaux compris dans au moins la partie de la cinquième bande de fréquences comprenant la troisième bande de fréquences,
- détermination si des signaux analysés ne sont pas des signaux conformes au premier ou au second standard,
- mise du modem câble dans un mode de transmission et réception de données selon le second standard si des signaux analysés ne sont pas des signaux conformes au premier et au second standards et ne sont pas compris dans la troisième bande de fréquences.

Ainsi, il est possible d'adapter le fonctionnement d'un modem câble aux différents signaux présents sur un réseau de télévision par câble coaxial et de privilégier dès que cela est opportun, la mise du modem câble dans le second mode de fonctionnement et dans le mode de transmission et réception de données selon le second standard.

Selon un mode particulier de l'invention, l'analyse des signaux est effectuée dans la partie de la cinquième bande comprenant la troisième bande de fréquences et les fréquences supérieures à la troisième bande de fréquences.

Ainsi, la mise du modem câble dans le second mode de fonctionnement et dans le mode de transmission et réception de données selon le second standard adaptée aux différents signaux présents sur un réseau de télévision par câble coaxial.

Selon un mode particulier de l'invention, le modem câble est mis dans le premier mode de fonctionnement et dans le mode de transmission et réception de données selon le premier standard si la bande de fréquences occupée par les signaux analysés qui ne sont pas des signaux conformes au premier et au second standards est supérieure à une première valeur prédéterminée de bande de fréquences de la partie de la cinquième bande comprenant la troisième bande de fréquences et les fréquences supérieures à la troisième bande de fréquences.

Ainsi, la mise ou non du modem câble dans le second mode de fonctionnement et dans le mode de transmission et réception de données selon le second standard est adaptée aux différents signaux présents sur un réseau de télévision par câble coaxial.

Selon un mode particulier de l'invention, le procédé comporte en outre les étapes de :
- analyse des signaux compris dans la quatrième bande de fréquences,
- détermination si des signaux analysés ne sont pas des signaux conformes au premier ou au second standard.

Ainsi, la mise du modem câble dans le second mode de fonctionnement et dans le mode de transmission et réception de données selon le second standard est adaptée aux différents signaux présents sur un réseau de télévision par câble coaxial.

Selon un mode particulier de l'invention, la mise du modem câble dans le second mode de fonctionnement et le mode de transmission et réception de données selon le second standard est en outre effectuée si la bande de fréquences occupée par les signaux analysés qui ne sont pas des signaux conformes au premier et au second standards est inférieure à la première valeur prédéterminée de bande de fréquences de la partie de la cinquième bande comprenant la troisième bande de fréquences et les fréquences supérieures à la troisième bande de fréquences et si la bande de fréquences occupée par les signaux analysés qui ne sont pas des signaux conformes au premier et au second standards est inférieure à une seconde valeur prédéterminée de bande de fréquences de la quatrième bande de fréquences et le modem câble est mis dans le premier mode de fonctionnement et dans le mode de transmission et réception de données selon le premier standard si la bande de fréquences occupée par les signaux analysés qui ne sont pas des signaux conformes au premier et au second standards est supérieure à la seconde valeur prédéterminée de bande de fréquences de la quatrième bande de fréquences.

Ainsi, la mise du modem câble dans le second mode de fonctionnement et dans le mode de transmission et réception de données selon le second standard est adaptée aux différents signaux présents sur un réseau de télévision par câble coaxial.

Selon un mode particulier de l'invention, le procédé comporte en outre les étapes de :
- recherche d'un canal primaire descendant d'un des standards, le canal primaire descendant permettant d'obtenir des informations permettant d'obtenir des informations permettant de cartographier les canaux de la quatrième bande de fréquences et de la cinquième bande de fréquences,
- cartographie de la quatrième et de la cinquième bandes de fréquences.

Ainsi, la mise du modem câble dans le second mode de fonctionnement et dans le mode de transmission et réception de données selon le second standard est adaptée aux différents signaux présents sur un réseau de télévision par câble coaxial.

Selon un mode particulier de l'invention, le procédé comporte en outre l'étape de transfert d'informations représentatives des signaux analysés.

Selon un mode particulier de l'invention, la mise du modem câble dans le second mode de fonctionnement est effectuée à la réception d'une commande d'un équipement de tête de ligne.

Ainsi, la mise du modem câble dans le second mode de fonctionnement et dans le mode de transmission et réception de données selon le second standard est effectuée de manière centralisée par l'opérateur du réseau de télévision par câble coaxial et est adaptée à chaque modem câble.

Selon un mode particulier de l'invention, la mise du modem câble dans un mode de transmission et réception de données selon le premier ou le second standard est déterminée par le modem câble.

Selon un mode particulier de l'invention, le premier standard est le standard DOCSIS 3.0 et le second standard est le standard DOCSIS 3.1.

L'invention concerne aussi les programmes d'ordinateur stockés sur un support d'informations, lesdits programmes comportant des instructions permettant de mettre en œuvre les procédés précédemment décrits, lorsqu'ils sont chargés et exécutés par un système informatique.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 représente un système de communication pour le transport de données et d'accès à Internet utilisant les anciens réseaux de télévision par câble coaxial dans lequel la présente invention est implémentée ;
la Fig. 2 représente un exemple d'architecture d'un modem câble dans lequel la présente invention est implémentée ;
les Figs. 3 représentent des exemples de plans spectraux des standards DOCSIS 3.0 et 3.1 dans lesquels des signaux hors bande sont susceptibles d'exister ;
la Fig. 4 représente un exemple d'algorithme, exécuté par un modem câble selon la présente invention ;
la Fig. 5 représente un exemple d'algorithme exécuté par un modem câble selon un mode particulier de réalisation de la présente invention.

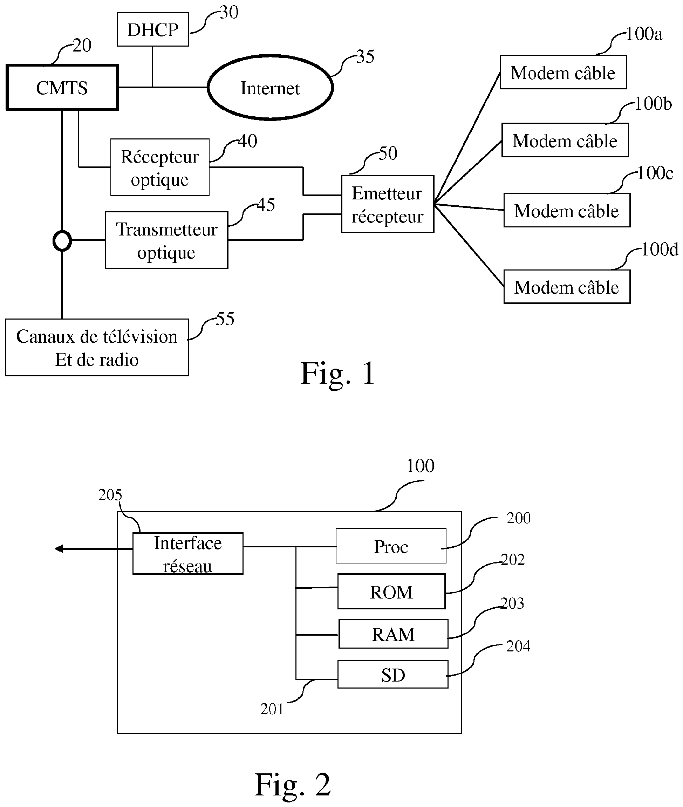

La **Fig. 1** représente un système de communication pour le transport de données et d'accès à Internet utilisant les anciens réseaux de télévision par câble coaxial dans lequel la présente invention est implémentée.

Le système comporte un équipement de tête de ligne CMTS noté 20. CMTS est l'acronyme du terme anglais « Cable Modem Termination System ».

L'équipement de tête de ligne CMTS 20 est équivalent au DSLAM (Digital Subscriber Line Access Multiplexer) de la technologie xDSL (Digital Subscriber Line). L'équipement de tête de ligne CMTS 20 est relié à un serveur DHCP 30 et au réseau Internet 35.

DHCP est l'acronyme du terme anglais « Dynamic Host Configuration Protocol » ou en français protocole de configuration dynamique des hôtes. Le serveur DHCP 30 attribue aux modems câble 100 et éventuellement à l'ordinateur du client leur adresse IP.

L'équipement de tête de ligne CMTS 20 est le dispositif auquel les ports montant et descendant sont connectés. Pour fournir une communication bidirectionnelle sur une fibre optique, il est nécessaire d'utiliser au moins deux longueurs d'ondes, une par sens de transmission, pour la liaison descendante composée d'un émetteur récepteur 50 et d'un transmetteur optique 45, et pour la liaison descendante composée de l'émetteur récepteur 50 d'un récepteur optique 40. La partie coaxiale se situe entre l'émetteur récepteur 50 et les différents modems câbles 100a à 100d.

Les canaux de télévision et/ou de radio sont délivrés aux modems câbles 100 par des dispositifs de diffusion 55 par l'intermédiaire du transmetteur optique 45 dans une bande de fréquences, dite d'exclusion, prévue par le ou les standards DOCSIS.

La bande de fréquences d'exclusion du standard DOCSIS 3.1 est différente de la bande de fréquences d'exclusion du standard DOCSIS 3.0.

La **Fig. 2** représente un exemple d'architecture d'un modem câble dans lequel la présente invention est implémentée.

Le modem câble 100 comprend :
- un processeur, micro-processeur, ou microcontrôleur 200 ;
- une mémoire volatile 203 ;
- une mémoire non volatile 202 ;
- éventuellement, un lecteur 204 de médium de stockage, tel qu'un lecteur de carte SD (*Secure Digital Card* en anglais ou *Carte Numérique Sécurisée* en français) ou un disque dur pour mémoriser les documents traités par la présente invention ;
- une interface réseau 205,
- un bus de communication 201 reliant le processeur 200 à la mémoire ROM 203, à la mémoire RAM 203, au lecteur de médium de stockage 204 et à l'interface réseau 205.

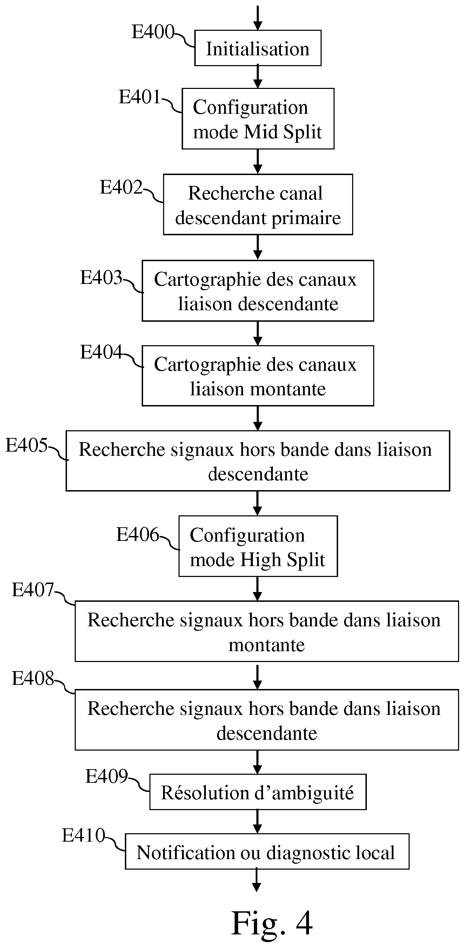

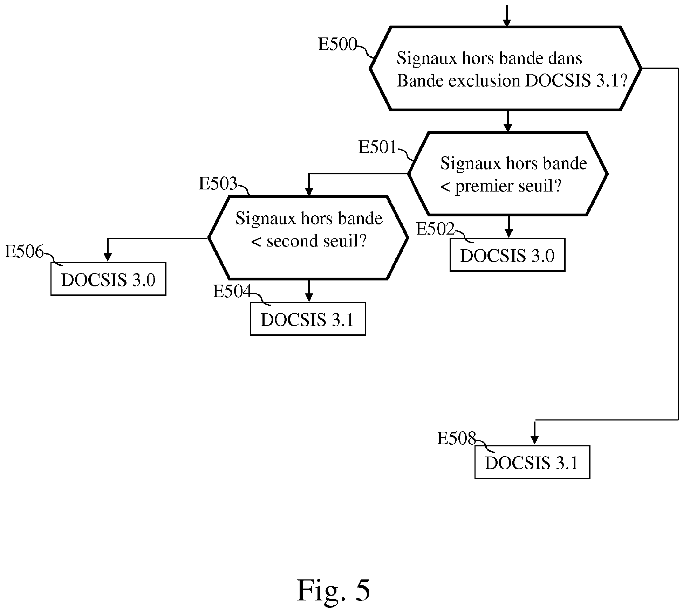

Le processeur 200 est capable d'exécuter des instructions chargées dans la mémoire volatile 203 à partir de la mémoire non volatile 202, d'une mémoire externe (non représentée), d'un support de stockage, tel qu'une carte SD ou autre, ou d'un réseau de communication. Lorsque le modem câble 100 est mis sous tension, le processeur 200 est capable de lire de la mémoire volatile 203 des instructions et de les exécuter. Ces instructions forment un programme d'ordinateur qui cause la mise en œuvre, par le processeur 200, de tout ou partie du procédé décrit en relation avec les Figs. 4 et 5.

Tout ou partie du procédé décrit en relation avec les Fig. 4 et 5 peut être implémenté sous forme logicielle par exécution d'un ensemble d'instructions par une machine programmable telle qu'un DSP (*Digital Signal Processor* en anglais ou *Unité de Traitement de Signal Numérique* en français) ou un microcontrôleur ou être implémenté sous forme matérielle par une machine ou un composant dédié, tel qu'un FPGA (*Field-Programmable Gate Array* en anglais ou *Matrice de Portes Programmable sur le Terrain* en français) ou un ASIC (*Application-Specific Integrated Circuit* en anglais ou *Circuit Intégré Spécifique à une Application* en français).

L'interface réseau 205 est apte à moduler et démoduler des signaux avec les modulations définies par les standards DOCSIS 3.0 et DOCSIS 3.1.

Par exemple, l'interface réseau 205 est apte à moduler et démoduler des signaux BPSK (acronyme de Binary Phase Shift Keying), QPSK (acronyme de Quaternary Phase Shift Keying), 8-QAM (acronyme de Quadradure Amplitude Modulation), 16-QAM, 32-QAM, 64-QAM, 128-QAM, 256-QAM, 512-QAM, 1024-QAM, 2048-QAM, et 4096-QAM.

Par exemple, l'interface réseau 205 comporte un duplexer configurable avec deux modes.

Un premier mode de fonctionnement, appelé Midsplit, correspondant au standard DOCSIS 3.0, fonctionne dans la bande de fréquences 5-85 MHz pour la liaison montante et dans la bande de fréquences 104-1218 MHz pour la liaison descendante.

Un second mode de fonctionnement appelé Highsplit, correspondant au standard DOCSIS 3.1, fonctionne dans la bande de fréquences 5-204 MHz pour la liaison montante et dans la bande de fréquences 254-1218 MHz pour la liaison descendante.

Un opérateur qui souhaite étendre son plan de fréquence avec ce type de produit déployé sur son parc d'abonné est confronté à la problématique d'allocation de fréquences supplémentaires pour l'allocation de canaux DOCSIS 3.1.

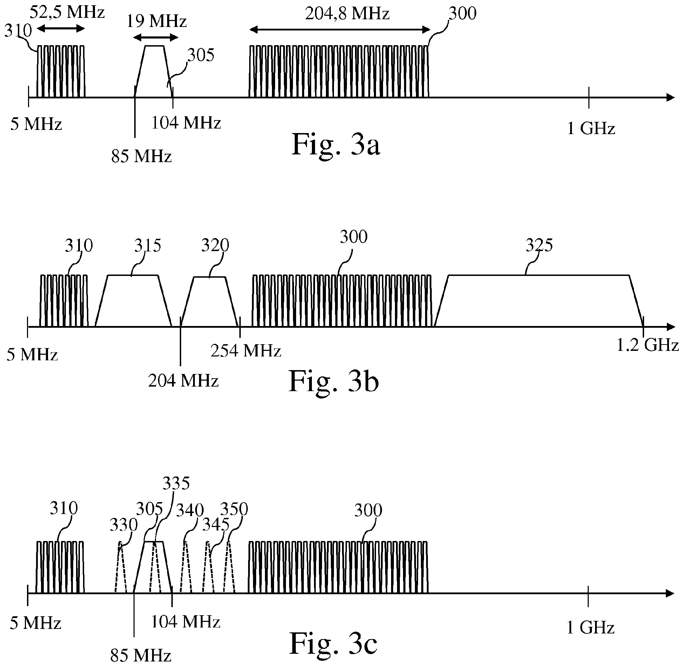

Les Figs. 3 représentent des exemples de plans spectraux des standards DOCSIS 3.0 et 3.1 dans lesquels des signaux hors bande sont susceptibles d'exister.

La **Fig. 3a** représente un exemple de plan spectral d'un réseau dans lequel le standard DOCSIS 3.0 est implémenté.

Dans l'exemple de la Fig. 3a, la liaison montante 310 est comprise entre 5 et 50 MHz voire jusqu'à 85Mhz, la liaison descendante 300 est comprise dans une gamme de fréquences entre 104 MHz et 1002MHz.

La liaison descendante 300 occupe une première bande de fréquences et la liaison montante 310 occupe une seconde bande de fréquences.

Les bandes de fréquences pour les liaisons montante et descendante sont séparées par une bande d'exclusion 305 comprise entre 85 et 104 MHz.

La bande d'exclusion 305 occupe une troisième bande de fréquences.

Ces plages de fréquences sont définies dans les standards DOCSIS 3.0 dans la spécification PHY D3.0 (CM-SP-PHYv3.0) et DOCSIS 3.1 PHY D.3.1 (CM-SP-PHYv3.1) paragraphe 7.2.1.

La **Fig. 3b** représente un exemple de plan spectral d'un réseau dans lequel le standard DOCSIS 3.1 est implémenté et qui coexiste avec des signaux conformes au standard DOCSIS 3.0.

Les signaux notés 310 et 300 représentent respectivement les signaux DOCSIS 3.0 transmis dans les liaisons montante et descendante.

Dans l'exemple de la Fig. 3b, la liaison montante 310 et 315 est comprise entre 5 et 204 MHz, la liaison descendante 300 et 325 est comprise dans une gamme de fréquences entre 254 MHz et 1.2GHz.

La liaison descendante 300 et 325 occupe une quatrième bande de fréquences et la liaison montante 310 et 315 occupe une cinquième bande de fréquences.

Les bandes de fréquences pour les liaisons montante et descendante sont séparées par une bande d'exclusion 320 comprise entre 204 et 254 MHz.

La bande d'exclusion 320 occupe une sixième bande de fréquences.

Le standard DOCSIS 3.1 offre une bande de fréquences supérieure à celle du standard DOCSIS 3.0. Le standard DOCSIS 3.1 permet de transférer dans la liaison montante des données conformes au standard DOCSIS 3.1 dans une plage de fréquence notée 310 et 315. Le standard DOCSIS 3.1 permet de transférer dans la liaison descendante des données conformes au standard DOCSIS 3.1 dans une plage de fréquence notée 300 et 325.

La **Fig. 3c** représente un exemple de plan spectral d'un réseau dans lequel le standard DOCSIS 3.0 est implémenté et qui comporte des signaux hors bande.

Un signal hors bande 330, 335, 340, 345 ou 350 est un signal qui n'est pas conforme au standard DOCSIS 3.0. C'est par exemple du bruit, un signal télévision ou radio.

Les signaux hors bandes ne gênent pas les transmissions conformes au standard DOCSIS 3.0 dans les liaisons montantes et descendantes tant qu'ils ne se superposent pas aux signaux DOCSIS 3.0.

De par la différence dans le plan de fréquence des bandes d'exclusion DOCSIS 3.0 et 3.1, les signaux hors bandes peuvent parfois gêner les transmissions conformes au standard DOCSIS 3.1 dans la liaison montante.

La **Fig. 4** représente un exemple d'algorithme, exécuté par un modem câble selon la présente invention.

Le présent algorithme est exécuté par exemple sur requête de l'équipement de tête de ligne CMTS 20 lorsque l'opérateur veut effectuer un diagnostic du plan fréquence pour éventuellement procéder à une réallocation de celui-ci ou basculer du mode de fonctionnement DOCSIS 3.0 vers DOCSIS 3.1.

Le présent algorithme est dans cet exemple exécuté par le processeur 200 du modem câble 100.

A l'étape E400, le processeur 200 commande l'initialisation de l'interface réseau 205. L'initialisation peut être identique à celle effectuée lors de la mise sous tension du modem câble 100 ou à celle effectuée lors du redémarrage logiciel du modem câble 100 ou consister en une réinitialisation des couches logicielles relatives aux standards DOCSIS 3.0 ou 3.1.

A l'étape E401, le processeur 200 configure l'interface réseau 205 dans le mode appelé Midsplit c'est-à-dire dans un mode de fonctionnement conforme au standard DOCSIS 3.0.

Il est à remarquer ici que les étapes E406 à E408 peuvent indifféremment être effectuées avant l'étape E401.

A l'étape E402, le processeur 200 commande la recherche d'un canal primaire descendant ou en anglais «Primary Capable downstream channel » dans la bande de fréquences de la liaison descendante.

Cette phase de recherche est par exemple conforme à celle définie dans les spécifications MULPI DOCSIS 3.0 et 3.1 et permet d'identifier les canaux primaires descendant par exemple via la transmission de message SYNC ou via la détection des préambules PHY Link Channel (PLC) sur des canaux OFDM primaires.

Un canal primaire descendant porte des messages SYNC, des messages MDD, des messages UCD et MAP qui sont requis par chaque modem câble 100 pour s'enregistrer sur le réseau DOCSIS ainsi que pour obtenir les informations nécessaires pour pouvoir transmettre et recevoir des données.

Lorsqu'un canal primaire descendant est trouvé, l'interface réseau 205 est en mesure d'établir une cartographie des signaux DOCSIS configurés pour la liaison descendante et la liaison montante.

L'interface réseau 205 exploite les descripteurs transmis par le système DOCSIS terminal (CMTS) côté opérateur qui diffuse cette cartographie via les messages DCD (Downstream Channel Descriptor), OCD (OFDM Channel Descriptor), DPD (Downstream Profile Descriptor).

A l'étape E403, l'interface réseau 205 établit une cartographie des canaux de la liaison descendante.

A l'étape E404, l'interface réseau 205 établit une cartographie des canaux de la liaison montante.

La cartographie des canaux de la liaison montante peut être établie à partir des informations envoyées par l'opérateur, via le CMTS 20.

Le CMTS 20 transmet des messages UCD (Upstream Channel Descriptor) décrivant le canal montant et des messages MAP (Upstream Bandwidth allocation MAP) décrivant les canaux de la liaison montante.

Les messages UCD décrits dans la spécification MULPI 3.1 permettent de décrire les caractéristiques des canaux qui sont utilisés sur la plage de fréquence fréquentielle de la liaison montante.

A l'étape E404, le processeur 200 commande l'interface réseau pour que celle-ci analyse au moins la partie de la première bande de fréquences comprenant la sixième bande de fréquences, voire toute la première bande de fréquences comprenant la bande de fréquences comprenant la liaison descendante dans le mode Midsplit. Il est à remarquer ici que la bande de fréquences analysée comprend la bande d'exclusion du mode Highsplit. Cette configuration permet de connaître les signaux présents dans la bande d'exclusion du mode Highsplit.

Cette étape permet de détecter tous les signaux présents sur la bande de fréquences analysée. En numérisant finement l'intégralité de la bande, il est possible d'établir les caractéristiques physiques des signaux et donc d'établir une liste de signaux ambigus avec pour chacun *a minima*, une largeur de canal, une position du canal, une densité spectrale de puissance qui peut être normalisée sur une largeur fréquentielle de 1,6MHz pour faciliter la comparaison avec les signaux conformes au standard DOCSIS 3.0 et DOCSIS 3.1, une densité spectrale de puissance maximum, une densité spectrale de puissance moyenne et une densité spectrale de puissance minimum.

A l'étape E406, le processeur 200 configure l'interface réseau 205 dans le mode appelé Highsplit.

A l'étape E407, le processeur 200 commande l'interface réseau pour que celle-ci analyse au moins la partie de la cinquième bande de fréquences comprenant la troisième bande de fréquences, ou la partie de la cinquième bande de fréquences comprenant la troisième bande de fréquences et les fréquences supérieures à la troisième bande de fréquences ou toute la cinquième bande de fréquences comprenant la bande de fréquences comprenant la liaison montante dans le mode Highsplit.

Il est à remarquer ici que la bande de fréquences analysée comprend la bande d'exclusion du mode Midsplit. Cette configuration permet de connaître les signaux présents dans la bande d'exclusion du mode Midsplit.

Cette étape permet de détecter tous les signaux présents sur la bande de fréquences analysée. En numérisant finement l'intégralité de la bande, il est possible d'établir les caractéristiques physiques de signaux dans la bande d'exclusion du mode Midsplit et ceux qui sont proches de la bande d'exclusion du mode Midsplit, et donc d'établir une liste de signaux ambigus avec pour chacun *a minima*, une largeur de canal, une position du canal, une densité spectrale de puissance qui peut être normalisée sur une largeur fréquentielle de 1,6MHz pour faciliter la comparaison avec les signaux conformes aux standards DOCSIS, une densité spectrale de puissance maximum, une densité spectrale de puissance moyenne et une densité spectrale de puissance minimum.

Le processeur 200 à l'issue des étapes E405 à E408 a ainsi connaissance des signaux compris dans les bandes d'exclusion des modes Mid split et Highsplit et situés à proximité de celles-ci.

A l'étape suivante E409, le processeur 200 établit, pour chaque signal détecté aux étapes E405 à E408, un diagnostic qui permet de lever toute ambiguïté sur la nature de ces signaux et de confirmer qu'ils ne sont pas des signaux conformes aux standards DOCSIS.

A partir de la cartographie des signaux effectuée aux étapes E403 et E404 et des signaux détectés aux étapes E405 à E408, le processeur 200 peut déterminer des signaux hors bande qui se superposent ou non aux signaux DOCSIS cartographiés.

S'il y a chevauchement entre ces 2 ensembles de signaux, ou si la configuration transmise par le CMTS 20 ne correspond pas aux signaux détectés aux étapes E405 à E408, il y a une ambiguïté sur la nature des signaux.

Le processeur 200 commande l'interface réseau 205 pour que celle-ci résolve les ambiguïtés détectées. Par exemple, l'interface réseau 205 analyse les signaux correspondant aux ambiguïtés détectées en analysant les caractéristiques physiques de ces signaux et/ou en analysant ces signaux au niveau de la couche MAC.

Les spécifications DOCSIS PHY, DOCSIS DRFI, ITU-T Recommendation J.83 Annex B pour l'Amérique du Nord et ETSI EN 300 429 V1.2.1 pour l'Europe, définissent précisément les caractéristiques électriques, la structure des trames physiques, le codage du canal et sa modulation.

Ces spécifications décrivent la manière dont sont conçues les différentes modulations utilisées par un canal DOCSIS.

L'interface réseau 205 vérifie si les caractéristiques telles que la densité spectrale de puissance, la largeur de canal, concordent ou pas avec un signal DOCSIS, s'il est possible de démoduler le signal avec une modulation comprise dans le standard DOCSIS 3.0 et 3.1, si les méthodes de correction d'erreur prévues par les standards DOCSIS fonctionnent, si les signaux de synchronisation prévus par les standards DOCSIS sont présents.

Si une de ces caractéristiques ne concorde pas avec celles d'un signal DOCSIS 3.0 et 3.1, la résolution d'ambiguïté peut conclure qu'il s'agit d'un signal hors bande.

La méthode de résolution d'ambiguïté au niveau de la couche MAC suppose que le signal reçu par le modem câblé 100 est conforme aux caractéristiques de la couche Physique DOCSIS.

Si la couche physique ne lève pas l'ambiguïté, le procédé suivant permet de lever toute ambiguïté en scrutant les messages transmis par le CMTS 20 dans au moins un canal DOCSIS primaire descendant.

Il s'agit notamment de scruter l'arrivée des messages listés à l'étape E403. Si les messages attendus ne sont pas conformes au standard DOCSIS 3.0, alors la méthode de résolution peut lever l'ambiguïté.

A l'étape E410, le processeur 200 commande le transfert au CMTS 20, par l'intermédiaire de la liaison montante, de la liste de toutes les signaux reconnus comme hors bande à l'étape 408, c'est-à-dire ne correspondant pas à des signaux conformes aux standards DOCSIS 3.0 et 3.1, et/ou exécute l'algorithme de la Fig. 5.

Eventuellement, un message de réponse est reçu du CTMS 20 indiquant au processor 200 dans quel mode de fonctionnement celui-ci doit se mettre.

La **Fig. 5** représente un exemple d'algorithme exécuté par un modem câble selon un mode particulier de réalisation de la présente invention.

Le présent algorithme est dans cet exemple exécuté par le processeur 200 du modem câble 100.

A l'étape E500, le processeur 200 vérifie si des signaux reconnus comme hors bande à l'étape 408, c'est-à-dire ne correspondant pas à des signaux conformes aux standards DOCSIS 3.0 et 3.1, sont compris dans la bande d'exclusion DOCSIS 3.1.

Dans l'affirmative, le processeur 200 passe à l'étape E501. Dans la négative, le processeur 200 passe à l'étape E508.

A l'étape E508, le processeur 200 configure l'interface réseau 205 dans le mode appelé Highsplit ou en d'autres termes pour que celle-ci fonctionne selon le standard DOCSIS 3.1.

A l'étape E501, le processeur 200 vérifie si la bande de fréquences occupée par les signaux reconnus comme hors bande à l'étape 408, c'est-à-dire ne correspondant pas à des signaux conformes aux standards DOCSIS 3.0 et 3.1, est inférieure à une première valeur prédéterminée de bande de fréquences de la partie de la cinquième bande comprenant la troisième bande de fréquences et les fréquences supérieures à la troisième bande de fréquences. Par exemple, la première valeur prédéterminée de bande de fréquences est égale à 50%.

Dans l'affirmative, le processeur 200 passe à l'étape E503. Dans la négative, le processeur 200 passe à l'étape E502.

A l'étape E502, le processeur 200 configure l'interface réseau 205 dans le mode appelé Midsplit ou en d'autres termes pour que celle-ci fonctionne selon le standard DOCSIS 3.0.

A l'étape E503, le processeur 200 vérifie si la bande de fréquences occupée par les signaux reconnus comme hors bande, c'est-à-dire ne correspondant pas à des signaux conformes aux standards DOCSIS 3.0 et 3.1, est inférieure à une seconde valeur prédéterminée de bande de fréquences de la quatrième bande de fréquences. Par exemple, la seconde valeur prédéterminée de bande de fréquences est égale à 20%

Dans l'affirmative, le processeur 200 passe à l'étape E504. Dans la négative, le processeur 200 passe à l'étape E506.

A l'étape E504, le processeur 200 configure l'interface réseau 205 dans le mode appelé Highsplit ou en d'autres termes pour que celle-ci fonctionne selon le standard DOCSIS 3.1.

A l'étape E506, le processeur 200 configure l'interface réseau 205 dans le mode appelé Midsplit ou en d'autres termes pour que celle-ci fonctionne selon le standard DOCSIS 3.0.

## Revendications

1. Procédé de sélection d'un mode de fonctionnement d'un modem câble entre un premier et un second modes de fonctionnement, le premier mode de fonctionnement permettant la réception de données dans une liaison descendante occupant une première bande de fréquences et la transmission de données dans une liaison montante occupant une seconde bande de fréquences, les première et seconde bandes de fréquences étant séparées par une troisième bande de fréquences, le second mode de fonctionnement permettant la réception de données dans une liaison descendante occupant une quatrième bande de fréquences et la transmission de données dans une liaison montante occupant une cinquième bande de fréquences, les quatrième et cinquième bandes de fréquences étant séparées par une sixième bande de fréquences, la troisième bande de fréquences étant comprise dans la cinquième bande de fréquences et la sixième bande de fréquences étant comprise dans la première bande de fréquences, les données transmises et reçues étant conformes à un premier et/ou un second standard, **caractérisé en ce que** le procédé comporte les étapes, effectuées par le modem câble, de :
- mise du modem câble dans le second mode de fonctionnement,
- analyse des signaux compris dans au moins la partie de la cinquième bande de fréquences comprenant la troisième bande de fréquences,
- détermination (E500) si des signaux analysés ne sont pas des signaux conformes au premier ou au second standard,
- mise (E508) du modem câble dans un mode de transmission et réception de données selon le second standard si des signaux analysés ne sont pas des signaux conformes au premier et au second standards et ne sont pas compris dans la troisième bande de fréquences.

2. Procédé selon la revendication 1, **caractérisé en ce que** l'analyse des signaux est effectuée dans la partie de la cinquième bande comprenant la troisième bande de fréquences et les fréquences supérieures à la troisième bande de fréquences.

3. Procédé selon la revendication 2, **caractérisé en ce que** le modem câble est mis dans le premier mode de fonctionnement et dans le mode de transmission et réception de données selon le premier standard si la bande de fréquences occupée par les signaux analysés qui ne sont pas des signaux conformes au premier et au second standards est supérieure à une première valeur prédéterminée de bande de fréquences de la partie de la cinquième bande comprenant la troisième bande de fréquences et les fréquences supérieures à la troisième bande de fréquences.

4. Procédé selon l'une quelconque des revendications 1 à 3, **caractérisé en ce que** le procédé comporte en outre les étapes de :
- analyse des signaux compris dans la quatrième bande de fréquences,
- détermination si des signaux analysés ne sont pas des signaux conformes au premier ou au second standard.

5. Procédé selon la revendication 4, **caractérisé en ce que** la mise du modem câble dans le second mode de fonctionnement et le mode de transmission et réception de données selon le second standard est en outre effectuée si la bande de fréquences occupée par les signaux analysés qui ne sont pas des signaux conformes au premier et au second standards est inférieure à la première valeur prédéterminée de bande de fréquences de la partie de la cinquième bande comprenant la troisième bande de fréquences et les fréquences supérieures à la troisième bande de fréquences et si la bande de fréquences occupée par les signaux analysés qui ne sont pas des signaux conformes au premier et au second standards est inférieure à une seconde valeur prédéterminée de bande de fréquences de la quatrième bande de fréquences et le modem câble est mis dans le premier mode de fonctionnement et dans le mode de transmission et réception de données selon le premier standard si la bande de fréquences occupée par les signaux analysés qui ne sont pas des signaux conformes au premier et au second standards est supérieure à la seconde valeur prédéterminée de bande de fréquences de la quatrième bande de fréquences.

6. Procédé selon l'une quelconque des revendications 1 à 5, **caractérisé en ce que** le procédé comporte en outre les étapes de :
- recherche d'un canal primaire descendant d'un des standards, le canal primaire descendant permettant d'obtenir des informations permettant d'obtenir des informations permettant de cartographier les canaux de la quatrième bande de fréquences et de la cinquième bande de fréquences,
- cartographie de la quatrième et de la cinquième bandes de fréquences.

7. Procédé selon l'une quelconque des revendications 1 à 4, **caractérisé en ce que** le procédé comporte en outre l'étape de transfert d'informations représentatives des signaux analysés.

8. Procédé selon la revendication 7, **caractérisé en ce que** la mise du modem câble dans le second mode de fonctionnement est effectuée à la réception d'une commande d'un équipement de tête de ligne.

9. Procédé selon l'une quelconque des revendications 1 à 7, **caractérisé en ce que** la mise du modem câble dans un mode de transmission et réception de données selon le premier ou le second standard est déterminée par le modem câble.

10. Procédé selon l'une quelconque des revendications 1 à 9, **caractérisé en ce que** le premier standard est le standard DOCSIS 3.0 et le second standard est le standard DOCSIS 3.1.

11. Dispositif de sélection d'un mode de fonctionnement d'un modem câble (100) entre un premier et un second modes de fonctionnement, le premier mode de fonctionnement permettant la réception de données dans une liaison descendante occupant une première bande de fréquences et la transmission de données dans une liaison montante occupant une seconde bande de fréquences, les première et seconde bandes de fréquences étant séparées par une troisième bande de fréquences, le second mode de fonctionnement permettant la réception de données dans une liaison descendante occupant une quatrième bande de fréquences et la transmission de données dans une liaison montante occupant une cinquième bande de fréquences, les quatrième et cinquième bandes de fréquences étant séparées par une sixièmes bande de fréquences, la troisième bande de fréquences étant comprise dans la cinquième bande de fréquences et la sixième bande de fréquences étant comprise dans la première bande de fréquence, les données transmises et reçues étant conformes à un premier et/ou un second standard, **caractérisé en ce que** le procédé comporte les étapes, effectuées par le modem câble, de :
- mise du modem câble dans le second mode de fonctionnement,
- analyse des signaux compris dans au moins la partie de la cinquième bande de fréquences comprenant la troisième bande de fréquences,
- détermination si des signaux analysés ne sont pas des signaux conformes au premier ou au second standard,
- mise du modem câble dans un mode de transmission et réception de données selon le second standard si des signaux analysés ne sont pas des signaux conformes au premier et au second standards et ne sont pas compris dans la troisième bande de fréquences.

12. Programme d'ordinateur stocké sur un support d'informations, ledit programme comportant des instructions permettant de mettre en œuvre le procédé selon l'une quelconque des revendications 1 à 10, lorsqu'il est chargé et exécuté par un système informatique.

13. Moyens de stockage, **caractérisés en ce qu'**ils stockent un programme d'ordinateur comprenant des instructions pour mettre en œuvre, par un dispositif, le procédé selon l'une quelconque des revendications 1 à 10, lorsque ledit programme est exécuté par un processeur dudit dispositif.

## Patentansprüche

1. Verfahren zur Auswahl eines Betriebsmodus eines Kabelmodems zwischen einem ersten und einem zweiten Betriebsmodus, wobei der erste Betriebsmodus den Empfang von Daten über eine Abwärtsverbindung, die ein erstes Frequenzband einnimmt, und das Senden von Daten über eine Aufwärtsverbindung, die ein zweites Frequenzband einnimmt, ermöglicht, wobei das erste und das zweite Frequenzband durch ein drittes Frequenzband getrennt sind, wobei der zweite Betriebsmodus den Empfang von Daten über eine Abwärtsverbindung, die ein viertes Frequenzband einnimmt, und das Senden von Daten über eine Aufwärtsverbindung, die ein fünftes Frequenzband einnimmt, ermöglicht, wobei das vierte und das fünfte Frequenzband durch ein sechstes Frequenzband getrennt sind, wobei das dritte Frequenzband in dem fünften Frequenzband enthalten ist und das sechste Frequenzband in dem ersten Frequenzband enthalten ist, wobei die gesendeten und empfangenen Daten einem ersten und/oder einem zweiten Standard entsprechen, **dadurch gekennzeichnet, dass** das Verfahren die von dem Kabelmodem ausgeführten Schritte umfasst:
- Versetzen des Kabelmodems in den zweiten Betriebsmodus,
- Analyse der Signale, die in wenigstens dem Teil des fünften Frequenzbandes enthalten sind, der das dritte Frequenzband umfasst,
- Bestimmung (E500), ob analysierte Signale nicht Signale sind, die dem ersten oder dem zweiten Standard entsprechen,
- Versetzen (E508) des Kabelmodems in einen Modus des Sendens und des Empfangs von Daten gemäß dem zweiten Standard, falls analysierte Signale nicht Signale sind, die dem ersten und dem zweiten Standard entsprechen, und nicht in dem dritten Frequenzband enthalten sind.

2. Verfahren nach Anspruch 1, **dadurch gekennzeichnet, dass** die Analyse der Signale in dem Teil des fünften Bandes durchgeführt wird, der das dritte Frequenzband und die Frequenzen, die höher als das dritte Frequenzband sind, umfasst.

3. Verfahren nach Anspruch 2, **dadurch gekennzeichnet, dass** das Kabelmodem in den ersten Betriebsmodus und in den Modus des Sendens und des Empfangs von Daten gemäß dem ersten Standard versetzt wird, falls das Frequenzband, das von den analysierten Signalen eingenommen wird, welche nicht dem ersten und dem zweiten Standard entsprechende Signale sind, höher als ein erster vorbestimmter Frequenzbandwert des Teils des fünften Bandes ist, der das dritte Frequenzband und die Frequenzen, die höher als das dritte Frequenzband sind, umfasst.

4. Verfahren nach einem der Ansprüche 1 bis 3, **dadurch gekennzeichnet, dass** das Verfahren außerdem die Schritte umfasst:
- Analyse der Signale, die im vierten Frequenzband enthalten sind,
- Bestimmung, ob analysierte Signal nicht Signale sind, die dem ersten oder dem zweiten Standard entsprechen.

5. Verfahren nach Anspruch 4, **dadurch gekennzeichnet, dass** das Versetzen des Kabelmodems in den zweiten Betriebsmodus und den Modus des Sendens und des Empfangs von Daten gemäß dem zweiten Standard außerdem durchgeführt wird, falls das Frequenzband, das von den analysierten Signalen eingenommen wird, welche nicht dem ersten und dem zweiten Standard entsprechende Signale sind, niedriger als der erste vorbestimmte Frequenzbandwert des Teils des fünften Bandes ist, der das dritte Frequenzband und die Frequenzen, die höher als das dritte Frequenzband sind, umfasst, und falls das Frequenzband, das von den analysierten Signalen eingenommen wird, welche nicht dem ersten und dem zweiten Standard entsprechende Signale sind, niedriger als ein zweiter vorbestimmter Frequenzbandwert des vierten Frequenzbandes ist, und das Kabelmodem in den ersten Betriebsmodus und in den Modus des Sendens und des Empfangs von Daten gemäß dem ersten Standard versetzt wird, falls das Frequenzband, das von den analysierten Signalen eingenommen wird, welche nicht dem ersten und dem zweiten Standard entsprechende Signale sind, höher als der zweite vorbestimmte Frequenzbandwert des vierten Frequenzbandes ist.

6. Verfahren nach einem der Ansprüche 1 bis 5, **dadurch gekennzeichnet, dass** das Verfahren außerdem die Schritte umfasst:
- Suche nach einem primären Abwärtskanal eines der Standards, wobei der primäre Abwärtskanal ermöglicht, Informationen zu gewinnen, die es ermöglichen, die Kanäle des vierten Frequenzbandes und des fünften Frequenzbandes zu kartographieren,
- Kartographie des vierten und des fünften Frequenzbandes.

7. Verfahren nach einem der Ansprüche 1 bis 4, **dadurch gekennzeichnet, dass** das Verfahren außerdem den Schritt der Übermittlung von Informationen umfasst, die für die analysierten Signale repräsentativ sind.

8. Verfahren nach Anspruch 7, **dadurch gekennzeichnet, dass** das Versetzen des Kabelmodems in den zweiten Betriebsmodus beim Empfang eines Befehls einer Leitungsendeinrichtung durchgeführt wird.

9. Verfahren nach einem der Ansprüche 1 bis 7, **dadurch gekennzeichnet, dass** das Versetzen des Kabelmodems in einen Modus des Sendens und des Empfangs von Daten gemäß dem ersten oder dem zweiten Standard von dem Kabelmodem bestimmt wird.

10. Verfahren nach einem der Ansprüche 1 bis 9. **dadurch gekennzeichnet, dass** der erste Standard der Standard DOCSIS 3.0 ist und der zweite Standard der Standard DOCSIS 3.1 ist.

11. Vorrichtung zur Auswahl eines Betriebsmodus eines Kabelmodems (100) zwischen einem ersten und einem zweiten Betriebsmodus, wobei der erste Betriebsmodus den Empfang von Daten über eine Abwärtsverbindung, die ein erstes Frequenzband einnimmt, und das Senden von Daten über eine Aufwärtsverbindung, die ein zweites Frequenzband einnimmt, ermöglicht, wobei das erste und das zweite Frequenzband durch ein drittes Frequenzband getrennt sind, wobei der zweite Betriebsmodus den Empfang von Daten über eine Abwärtsverbindung, die ein viertes Frequenzband einnimmt, und das Senden von Daten über eine Aufwärtsverbindung, die ein fünftes Frequenzband einnimmt, ermöglicht, wobei das vierte und das fünfte Frequenzband durch ein sechstes Frequenzband getrennt sind, wobei das dritte Frequenzband in dem fünften Frequenzband enthalten ist und das sechste Frequenzband in dem ersten Frequenzband enthalten ist, wobei die gesendeten und empfangenen Daten einem ersten und/oder einem zweiten Standard entsprechen, **dadurch gekennzeichnet, dass** das Verfahren die von dem Kabelmodem ausgeführten Schritte umfasst:
- Versetzen des Kabelmodems in den zweiten Betriebsmodus,
- Analyse der Signale, die in wenigstens dem Teil des fünften Frequenzbandes enthalten sind, der das dritte Frequenzband umfasst,
- Bestimmung, ob analysierte Signale nicht Signale sind, die dem ersten oder dem zweiten Standard entsprechen,
- Versetzen des Kabelmodems in einen Modus des Sendens und des Empfangs von Daten gemäß dem zweiten Standard, falls analysierte Signale nicht Signale sind, die dem ersten und dem zweiten Standard entsprechen, und nicht in dem dritten Frequenzband enthalten sind.

12. Computerprogramm, welches auf einem Datenträger gespeichert ist, wobei das Programm Anweisungen umfasst, die es ermöglichen, wenn es von einem Computersystem geladen und ausgeführt wird, das Verfahren nach einem der Ansprüche 1 bis 10 durchzuführen.

13. Speichermittel, **dadurch gekennzeichnet, dass** sie ein Computerprogramm speichern, das Anweisungen umfasst, um durch eine Vorrichtung das Verfahren nach einem der Ansprüche 1 bis 10 durchzuführen, wenn dieses Programm von einem Prozessor der Vorrichtung ausgeführt wird.

## Claims

1. Method for selecting an operating mode of a cable modem between first and second operating modes, the first operating mode allowing reception of data in a downlink occupying a first frequency band and the transmission of data in an uplink occupying a second frequency band, the first and second frequency bands being separated by a third frequency band, the second operating mode allowing the reception of data in a downlink occupying a fourth frequency band and the transmission of data in an uplink occupying a fifth frequency band, the fourth and fifth frequency bands being separated by a sixth frequency band, the third frequency band lying in the fifth frequency band and the sixth frequency band lying in the first frequency band, the data transmitted and received being in accordance with a first and/or second standard, **characterised in that** the method comprises the steps, performed by the cable modem, of:
- setting the cable modem in the second operating mode,
- analysing the signals included in at least the part of the fifth frequency band comprising the third frequency band,
- determining (E500) whether signals analysed are not signals in accordance with the first or second standard,
- setting (E508) the cable modem in a data transmission and reception mode according to the second standard if signals analysed are not signals in accordance with the first and second standards and are not included in the third frequency band.

2. Method according to claim 1, **characterised in that** the analysis of the signals is carried out in the part of the fifth band comprising the third frequency band and the frequencies higher than the third frequency band.

3. Method according to claim 2, **characterised in that** the cable modem is set in the first operating mode and in the data transmission and reception mode according to the first standard if the frequency band occupied by the signals analysed that are not signals in accordance with the first and second standards is higher than a first predetermined frequency-band value of the part of the fifth band comprising the third frequency band and the frequencies higher than the third frequency band.

4. Method according to any of claims 1 to 3, **characterised in that** the method further comprises the steps of:
- analysing the signals included in the fourth frequency band,
- determining whether signals analysed are not signals in accordance with the first or second standard.

5. Method according to claim 4, **characterised in that** setting the cable modem in the second operating mode and the data transmission and reception mode according to the second standard is further performed if the frequency band occupied by the signals analysed that are not signals in accordance with the first and second standards is lower than the first predetermined frequency-band value of the part of the fifth band comprising the third frequency band and the frequencies higher than the third frequency band and if the frequency band occupied by the signals analysed that are not signals in accordance with the first and second standards is lower than a second predetermined frequency-band value of the fourth frequency band, and the cable modem is set in the first operating mode and in the data transmission and reception mode according to the first standard if the frequency band occupied by the signals analysed that are not signals in accordance with the first and second standards is higher than the second predetermined frequency-band value of the fourth frequency band.

6. Method according to any of claims 1 to 5, **characterised in that** the method further comprises the steps of:
- seeking a downlink primary channel of one of the standards, the downlink primary channel making it possible to obtain information making it possible to map the channels of the fourth frequency band and of the fifth frequency band,
- mapping the fourth and fifth frequency bands.

7. Method according to any of claims 1 to 4, **characterised in that** the method further comprises the step of transferring information representing the signals analysed.

8. Method according to claim 7, **characterised in that** setting the cable modem in the second operating mode is carried out on reception of a command from terminal equipment.

9. Method according to any of claims 1 to 7, **characterised in that** setting the cable modem in a data transmission and reception mode according to the first or second standard is determined by the cable modem.

10. Method according to any of claims 1 to 9, **characterised in that** the first standard is the DOCSIS 3.0 standard and the second standard is the DOCSIS 3.1 standard.

11. Device for selecting an operating mode of a cable modem (100) between first and second operating modes, the first operating mode allowing reception of data in a downlink occupying a first frequency band and the transmission of data in an uplink occupying a second frequency band, the first and second frequency bands being separated by a third frequency band, the second operating mode allowing the reception of data in a downlink occupying a fourth frequency band and the transmission of data in an uplink occupying a fifth frequency band, the fourth and fifth frequency bands being separated by a sixth frequency band, the third frequency band lying in the fifth frequency band and the sixth frequency band lying in the first frequency band, the data transmitted and received being in accordance with a first and/or second standard, **characterised in that** the method comprises the steps, performed by the cable modem, of:
- setting the cable modem in the second operating mode,
- analysing the signals included in at least the part of the fifth frequency band comprising the third frequency band,
- determining whether signals analysed are not signals in accordance with the first or second standard,
- setting the cable modem in a data transmission and reception mode according to the second standard if signals analysed are not signals in accordance with the first and second standards and are not included in the third frequency band.

12. Computer program stored on an information carrier, said program comprising instructions for implementing the method according to any of claims 1 to 10 when it is loaded into and executed by a computer system.

13. Storage means, **characterised in that** they store a computer program comprising instructions for the implementation, by a device, of the method according to any of claims 1 to 10 when said program is executed by a processor of said device.
